Europäisches Patentamt

European Patent Office

Office européen des brevets

(11) Veröffentlichungsnummer : **0 067 920**
**B1**

(12) # EUROPÄISCHE PATENTSCHRIFT

(45) Veröffentlichungstag der Patentschrift :
**09.10.85**

(51) Int. Cl.⁴ : **F 16 N 25/02**

(21) Anmeldenummer : **81810252.7**

(22) Anmeldetag : **19.06.81**

(54) **Verteilelement einer Schmiereinrichtung insbesondere für eine Webmaschine.**

(43) Veröffentlichungstag der Anmeldung :
**29.12.82 Patentblatt 82/52**

(45) Bekanntmachung des Hinweises auf die Patenterteilung : **09.10.85 Patentblatt 85/41**

(84) Benannte Vertragsstaaten :
**CH DE FR GB IT LI**

(56) Entgegenhaltungen :
**BE-A-    495 148**
**CH-A-    323 103**
**DE-A- 2 709 584**
**FR-A-    906 971**
**GB-A-    447 010**

(73) Patentinhaber : **GEBRÜDER SULZER AKTIENGE-
SELLSCHAFT**
**Zürcherstrasse 9**
**CH-8401 Winterthur (CH)**

(72) Erfinder : **Breisinger, Otto**
**Dr. Zimmermannstrasse 32**
**D-7758 Meersburg (DE)**
Erfinder : **Burgbacher, Herbert**
**Klostergasse 7**
**D-7701 Hilzingen (DE)**

Jouve, 18, rue St-Denis, 75001 Paris, France

EP 0 067 920 B1

## Beschreibung

Die Erfindung betrifft ein Verteilelement einer Schmiereinrichtung, insbesondere für eine Webmaschine, mit mindestens einem in einem Gehäuse hin und her verschiebbaren Steuerkolben, durch dessen Bewegung auf einer Stirnseite des Steuerkolbens gespeichertes Schmiermittel zu den Schmierstellen gedrückt wird, wobei der Steuerkolben einen mit dem Schmiermittel in Verbindung stehenden, achsparallelen Hauptkanal und mehrere aus diesem im wesentlichen radial abzweigende, axial gegeneinander versetzte Verteilkanäle enthält, und wobei in dem Gehäuse den Verteilkanälen zugeordnete, axial gegeneinander versetzte Zuführkanäle zum Zuführen des Schmiermittels zu den Schmierstellen angeordnet sind.

Bei einem bekannten Verteilelement der genannten Art entsprechen die Abstände zwischen den Verteilkanälen des Steuerkolbens genau den Abständen zwischen den ihnen zugeordneten, im Gehäuse ausgebildeten Zuführkanälen, in denen je ein senkrecht zum Steuerkolben beweglicher, federbelasteter Zumesskolben für das Schmiermittel angeordnet ist (CH-A-623 103). Entsprechend werden jeweils alle Verteilkanäle des Steuerkolbens zugleich mit den zu den Schmierstellen führenden Zuführkanälen des Gehäuses zusammengeführt. Eine aufeinanderfolgende, selektive Beaufschlagung einzelner Zuführkanäle, wodurch etwa ein vorteilhaft geringer Druckabfall im Schmiersystem erzielt werden kann, ist mit dem bekannten Verteilelement nicht möglich. Das bekannte Verteilelement mit den zahlreichen, relativ zum Steuerkolben beweglichen Zumesskolben ist konstruktiv relativ aufwendig und erfordert zudem, insbesondere für Maschinen mit mehreren, z. B. zwölf oder achtzehn hintereinander angeordneten Schmierstellen, einen relativ grossen Einbauraum, der insbesondere bei den bei Webmaschinen gegebenen Raumverhältnissen selten verfügbar ist.

Bei einem aus der DE-A-27 09 584 bekannten Verteilelement sind mehrere, z. B. drei hin und her verschiebbare Steuerkolben in jeweils einem Zylinderraum eines gemeinsamen Gehäuse gelagert. Jeder Steuerkolben kann stirnseitig durch das Schmiermittel beaufschlagt und verschoben werden. Hierdurch werden am Umfang befindliche Ringnuten des Steuerkolbens in eine Position verschoben, in der Verbindung zwischen zwei benachbarten Schmiermittelkanälen besteht. Durch die progressive Beaufschlagung der einzelnen Steuerkolben wird das Schmiermittel progressiv auf die entsprechenden Schmierleitungen und Schmierstellen verteilt.

Die bekannten Verteilelemente müssen jeweils an einer passenden Stelle der zu schmierenden Maschine angebracht und über Schlauchleitungen oder Rohre mit den einzelnen Schmierstellen verbunden werden. Insbesondere bei einer grösseren Anzahl von Schmierstellen ergibt sich hierdurch ein umfangreiches, gegebenenfalls unübersichtliches und störungsanfälliges Leitungs- bzw. Schlauchsystem.

Der Erfindung liegt die Aufgabe zugrunde, ein besonders in dieser Hinsicht verbessertes Verteilelement der eingangs genannten Art in einer kompakten, raumsparenden und konstruktiv einfachen Bauweise zu schaffen, welches eine aufeinanderfolgende Beaufschlagung der Zuführkanäle gestattet und welches in den den Schmierstellen möglichst nahe liegenden Maschinenbereich eingebaut werden kann.

Die Erfindung besteht darin, dass die Verteilkanäle in axialen Abständen voneinander angeordnet sind, welche von den entsprechenden Abständen zwischen den ihnen zugeordneten Zuführkanälen derart abweichen, dass bei Bewegung des Steuerkolbens progressiv jeweils nacheinander ein Verteil- und ein zugehöriger Zuführkanal miteinander in Wirkungsverbindung gelangen. Hierdurch wird es möglich, das Verteilement z. B. bei einer grösseren Anzahl von Schmierstellen in den Schaftführungen einer Webmaschine unmittelbar in der Führung unterzubringen. Auf Zuleitungsschläuche kann verzichtet werden. Das Schmiermittel kann unmittelbar durch im Gehäuse befindliche Kanäle zu den einzelnen Schmierstellen geleitet werden. Auch lassen sich besonders viele, progressiv zu versorgende Anschlüsse für Schmierstellen in raumsparender Weise unterbringen.

Bei einer Ausführungsform ist der Steuerkolben in einem in das Gehäuse einsetzbaren Zylinder verschiebbar angeordnet. Es wird dann möglich, Zylinder und Steuerkolben in einer entsprechenden Bohrung des Maschinengehäuses unmittelbar in der Nähe der Schmierstellen unterzubringen. Es können einfach herstellbare Massenteile zum Aufbau eines erfindungsgemässen Progressiv-Verteilers verwendet werden.

Andere besondere Ausführungsarten der Erfindung sind in den abhängigen Ansprüchen angegeben.

Weitere Merkmale ergeben sich aus der folgenden Beschreibung von Ausführungsbeispielen in Verbindung mit der Zeichnung und den Ansprüchen.

Figur 1 ist ein Längsschnitt durch einen erfindungsgemäss ausgebildeten Progressiv-Verteiler einer Zentralschmieranlage einer Webmaschine,

Figur 2 ist ein Schnitt nach Linie A-A in Fig. 1,

Figur 3 veranschaulicht eine andere Position der Teile nach Fig. 1,

Figur 4 zeigt in einem Längsschnitt ein weiteres Ausführungsbeispiel,

Figur 5 einen Schnitt nach Linie B-B in Fig. 4,

Figur 6 erläutert die Teile nach Fig. 4 in anderer Position,

Figuren 7 und 8 sind Längsschnitte einer weiteren Ausführungsform in zwei verschiedenen Stellungen,

Figur 9 veranschaulicht ein noch anderes Ausführungsbeispiel im Schnitt,

Figur 10 zeigt ein Detail einer gegenüber Fig.

7, 8 abgewandelten Ausführungsform in, grösserem Massstab,

Figuren 11 und 12 veranschaulichen ein weiteres, gegenüber Fig. 10 abgewandeltes Ausführungsbeispiel.

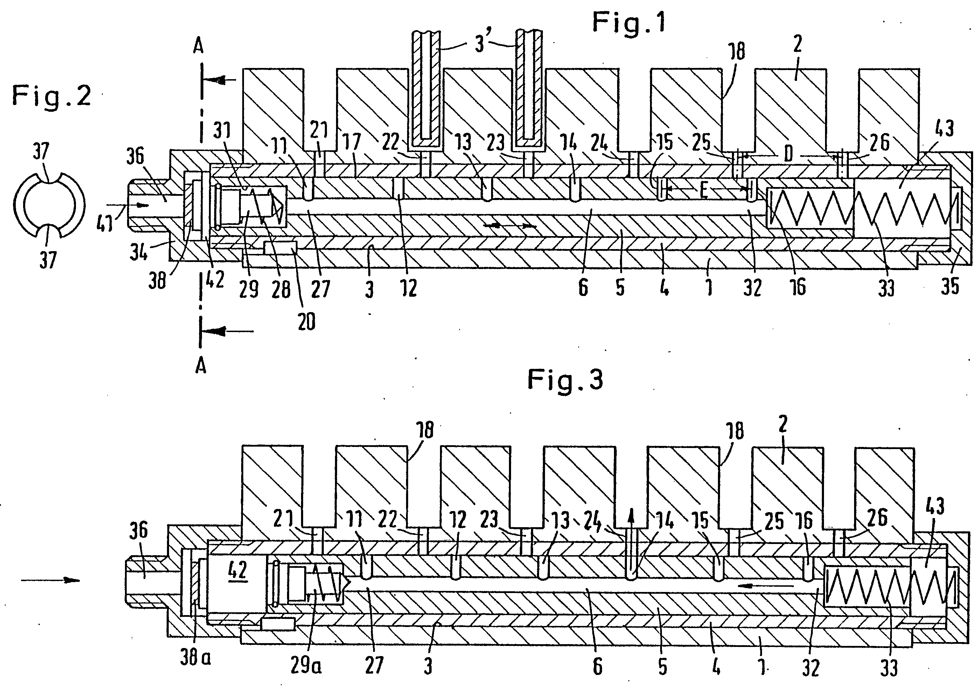

Am Gestell 1 einer nicht dargestellten Webmaschine ist eine Führung 2 für die Webschäfte 3' der Webmaschine gebildet. Die Schäfte 3 sind in Fig. 1 senkrecht zur Zeichenebene hin und her bewegbar. Durch sie wird in bekannter Weise das Webfach aus den Kettfäden gebildet.

In dem Maschinengestell 1 ist in der Nähe der Führung 2 eine zylindrische Bohrung 3 angebracht. In sie ist ein Steuerzylinder 4 eingeschoben, in welchem ein Steuerkolben 5 hin und her verschiebbar ist. Der Kolben 5 enthält einen achsparallel verlaufenden Hauptkanal 6 und senkrecht dazu angeordnete Verteilkanäle 11-16, die aus dem Hauptkanal 6 abgezweigt sind und zum Umfang 17 des Steuerkolbens 5 führen.

In den Führungen 18 für die Schäfte 3 sind Schmiermittelzuführkanäle 21-26 enthalten. Wie aus Fig. 1 und 3 ersichtlich, ist die Teilung (Abstand) D der Zuführkanäle 21-26 grösser als die Teilung (Abstand) E der Verteilkanäle 11-16.

An dem in Fig. 1 linken Ende des Hauptkanales 6 ist bei 27 ein unter Wirkung einer Feder 28 stehendes Schmiermittelzuführungsventil 29 angeordnet, das in einer Bohrung 31 des Steuerkolbens 5 verschiebbar ist. Am rechten Ende des Steuerkolbens ist bei 32 eine Druckfeder 33 abgestützt, die bestrebt ist, den Kolben 5 in Fig. 1 nach links zu bewegen. Der Zylinder 4 ist mittels Verschluss-Stücken 34, 35 im Maschinengestell 1 bzw. der Führung 2 gehalten und durch einen Keil 20 gegen Verdrehung gesichert. Bei 36 ist eine einzige Schmiermittelzuführungsleitung angeschlossen (Ein-Leiter-System). Sie kann durch ein mit Ausnehmungen 37 versehenes Rückschlagventil 38 verschlossen werden. Die Teile 4,5 bilden eine bauliche Einheit.

Die Wirkungsweise ist folgende. Das Schmiermittel, z. B. Fett, wird unter einem bestimmten Betriebsdruck von z. B. 50 bar gemäss Pfeil 41 in die Leitung 36 gedrückt. Unter dem Druck gelangt das Rückschlagventil 38 in die Offenstellung 38a nach Fig. 3, so dass das Fett in den Raum 42 gelangen kann. Unter dem Druck im Raum 42 wird das Schmiermittelzuführungsventil 29 gegen die Wirkung der Druckfeder 28 in die Schliess-Stellung 29a nach Fig. 3 bewegt, in der Hauptkanal 6 am Ende 27 verschlossen ist.

Ferner wird durch den Druck im Raum 42 nunmehr der Steuerkolben 5 aus der Stellung nach Fig. 1 nach rechts bewegt, so dass zunächst die Kanäle 11, 21 einander gegenübergestellt werden und der erste Schaft 3 bzw. seine Führungsnut 18 mit Fett geschmiert wird. Zufolge der unterschiedlichen Teilungen D, E gelangen nunmehr progressiv die Kanäle 11, 21 ; 12, 22 ; 13, 23 ; 14, 24 in Fig. 3 gezeichnete Position 15, 25 und schliesslich 16, 26 in Gegenüberstellung, so das sukzessive die entsprechenden Schaftführungen bzw. Schäfte mit Fett versorgt werden. Während der Rechtsbewegung des Steuerkolbens 5 wird die Feder 33 zusammengedrückt und dabei das in dem Fettspeicherraum 43 befindliche Fett durch den Hauptkanal 6 und die Verteilkanäle 11-16 in die Zuführungskanäle 21-26 und zu den Schmierstellen geführt.

Nach diesem Schmiervorgang wird der Druck in Leitung 36 weggenommen. Das Ventil 29 wird unter Wirkung der Feder 28 geöffnet (Stellung nach Fig. 1). Nunmehr wird der Steuerkolben 5 unter Wirkung von Feder 33 wieder nach links verschoben und das Rückschlagventil 38 geschlossen. Dabei wird das im Raum 42 befindliche Fett durch Kanal 6 in Fig. 1 und 3 nach rechts verdrängt, so dass sich der Vorratsraum 43 wieder auffüllt (zufolge der erhöhten Reibung in den relativ engen Kanälen 11-16 und 21-26 sowie durch den Widerstand in den Schaftführungen 18 lässt sich verhindern, dass das Fett etwa teilweise während der Linksbewegung des Steuerkolbens 5 zu den Schmierstellen in den Führungen 18 gelangt). Die Teile sind nunmehr wieder in der Ausgangsposition nach Fig. 1.

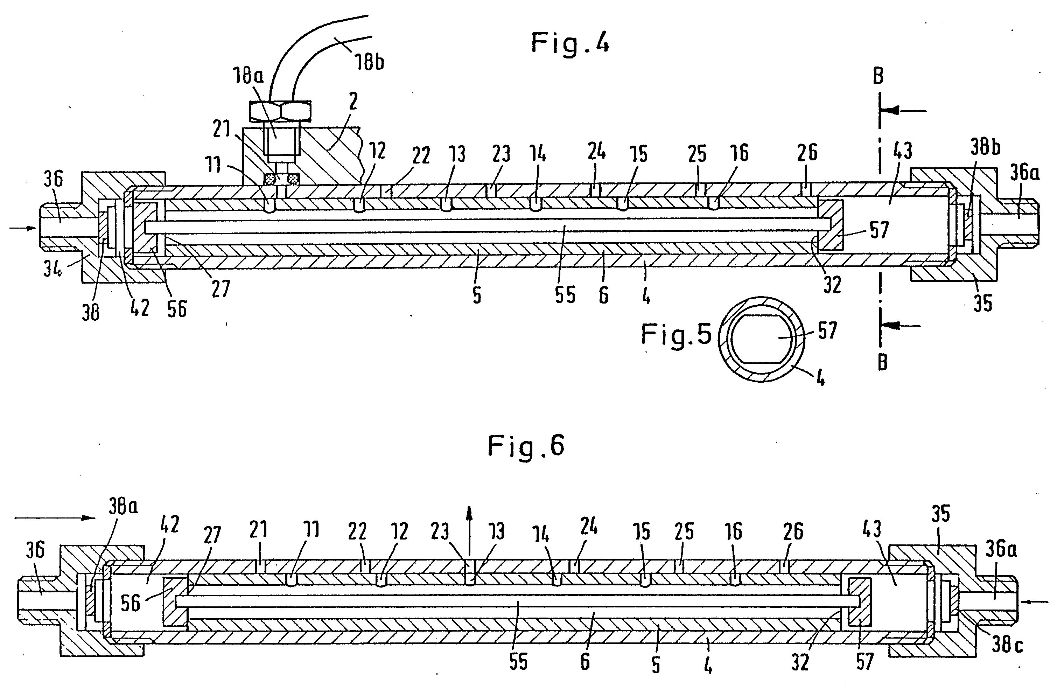

Bei der Bauart nach Fig. 4-6 (Zwei-Leiter-System) enthält der Hauptkanal 6 eine Ventilstange 55, an deren beiden Enden Ventilscheiben 56, 57 angebracht sind. Der durch die Teile 55-57 gebildete Ventilkörper ist im Steuerzylinder 4 verschiebbar gelagert.

Wenn zur Schmierung in der Zuführungsleitung 36 Druck gegeben wird, wird das Rückschlagventil 38 in die Offenstellung 38a nach Fig. 6 bewegt, die Teile 55-57 werden in die Stellung nach Fig. 6 verschoven, so dass der Hauptkanal 6 an seinem Ende 27 verschlossen und am anderen Ende 32 geöffnet wird. Bei weiterem Druck in Leitung 36 wird der Steuerkolben 5 zusammen mit den Teilen 55-57 nach rechts bewegt. Somit wird das Rückschlagventil 38b geschlossen. Dadurch kommen sukzessive die Kanäle 11, 21 ; 12, 22 ; 13, 23 Fig. 6 ; 14, 24 ; 15, 25 und schliesslich 16, 26 in Gegenüberstellung, wobei das Fett aus Raum 43 verdrängt wird. Dadurch werden die bei 21-26 bzw. 18a angeschlossenen Schmierleitungen versorgt, wobei in diesem Fall Schläuche 18b beispielsweise angenommen sind.

Für die nächste, programmgemässe Schmierung wird in die beim Verschlussstück 35 angeschlossene Fettzuführungsleitung 36a Druck gegeben. Der Druck bei 36 wird weggenommen. Dadurch werden Ventil 38b wieder in die Offenstellung nach Fig. 6 und ferner die Teile 55-57 nach links bewegt, so dass wieder die Position nach Fig. 4 entsteht, in der bei 32 verschlossen und bei 27 geöffnet ist. Dadurch entsteht im Raum 43 erhöhter Druck, wodurch der Steuerkolben 5 wieder nach links bewegt wird. Nunmehr werden zunächst die Kanäle 16, 26 voreinander gestellt, darauf die Kanäle 15, 25 usw. bis 11, 21. Während der Linksbewegung wird das im Raum 42 befindliche Fett durch den Hauptkanal 6 sukzessive in die einzelnen Kanäle 16-11 verdrängt und durch die Kanäle 26-21 den Schmierstellen zugeleitet.

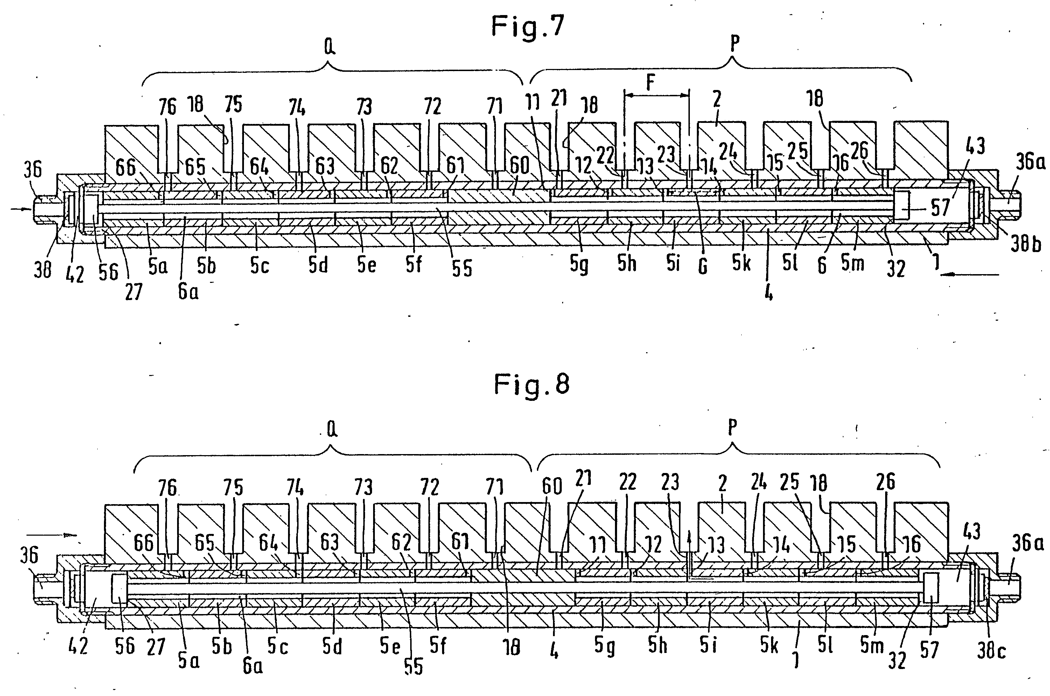

Bei dem Ausführungsbeispiel nach Fig. 7, 8 besteht der Kolben aus Segmenten 5a-5m. In der Mitte trägt die Ventilstange 55 ein Trennungsstück 60, das auf ihr und dem Zylinder 4 dichtend verschiebbar angeordnet ist.

Wenn Druck durch die Zuführungsleitung 36 gegeben wird, werden wiederum die Teile 38, 55-57, 38b nach rechts bewegt. Anschliessend wird unter dem Druck im Raum 42 der Kolben 5a bis 5m nach rechts verschoben. Dabei werden zunächst die Kanäle 11, 21 ; 12, 22 ; 13, 23 (vgl. Fig. 8) ; 14, 24 ; 15, 25 ; 16, 26 progressiv voreinander geschoben und die entsprechenden Schmierstellen unter Verdrängung des Fettes im Vorratsraum 43 sukzessive mit Fett versorgt.

Gemäss dem Schmierprogramm wird anschliessend oder zu einem späteren Zeitpunkt der Druck bei 36 weggenommen und es wird bei 36a Druck gegeben. Dadurch werden zunächst die Teile 38, 55-57, 38b nach links verschoben, so dass bei 32 geschlossen und bei 27 geöffnet wird. Anschliessend wird unter dem Druck im Speicherraum 43 der Kolben 5a-5m nach links bewegt, so dass sukzessive die Kanäle 61, 71 ; 62, 72 ; 63, 73 ; 64, 74 ; 65, 75 ; 66, 76 voreinander geschoben werden. Dadurch werden die entsprechenden Schmierstellen unter Verdrängen des im Vorratsraum 42 befindlichen Fettes progressiv geschmiert. Der Progressiv-Verteiler befindet sich nunmehr wieder in der Ausgangsstellung nach Fig. 7.

Auch bei dem Beispiel nach Fig. 7, 8 ist bei den Zuführkanälen 21-26 ; 71-76 überall dieselbe Teilung F und bei den Verteilkanälen 11-16 ; 61-66 die Teilung G vorgesehen, welche kleiner ist als F.

Bei dem zunächst beschriebenen Rechtshub des Kolbens 5a bis 5m werden die sechs im Abschnitt P liegenden Schaftführungen 18, bei dem folgenden Linkshub die im Bereich Q liegenden sechs Schaftführungen 18 geschmiert. Es stehen also insgesamt 12 Zuführkanäle 21-26, 71-76 für zwölf Schäfte zur Verfügung, also doppelt so viele als bei den Ausführungsformen nach Fig. 1-6. Bei einem vollen Hin- und Herhub des Kolbens 5a-5m erhalten sämtliche Schmierstellen ein Mal Schmierfett.

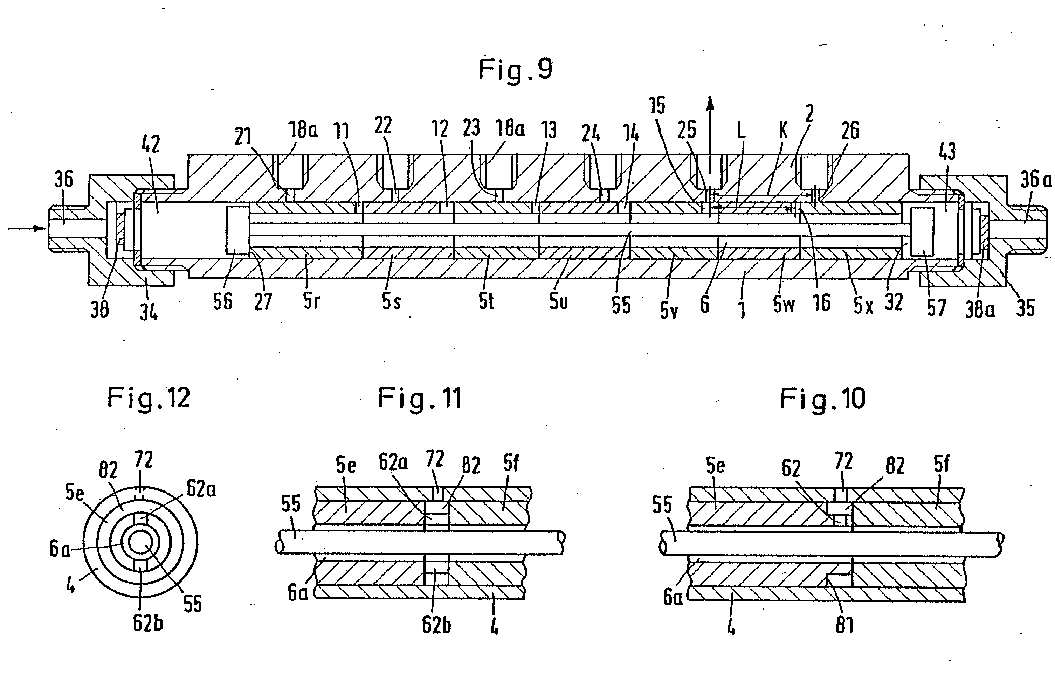

Bei der Bauart nach Fig. 9 (Zwei-Leiter-System) ist der Kolben aus den Abschnitten 5r-5x zusammengesetzt. Die Abschnitte sind verschieden lang ; z. B. ist der Abschnitt 5r länger als der Abschnitt 5s oder der Abschnitt 5u. Ferner sind die Verteilkanäle 11-16 verschieden dimensioniert ; z. B. besitzt der Verteilkanal 15 besonders grossen Querschnitt, während die Kanäle 11 und 13 wesentlich kleineren Querschnitt aufweisen. Der Abstand (Teilung) L ist nicht bei sämtlichen Verteilkanälen 11-16 gleich, sondern verschieden gross. Der Abstand (Teilung) K bei den Zuführkanälen 21-26 ist überall gleich. In jedem Fall ist jedoch der Abstand zwischen zwei benachbarten Zuführkanälen 21-26 grösser als der Abstand der beiden zugehörigen, benachbarten Verteilkanälke 11-16. Hierdurch lässt sich erzielen, dass die Menge des bei jedem Schmiervorgang in die einzelnen Leitungen 18 gegebenen Schmierfettes verschieden gross ist, was in besonderen Fällen von Vorteil sein kann.

Bei der in Fig. 9 wiedergegebenen Phase des Schmiervorganges befindet sich der Steuerkolben 5r-5x im Rechtshub. Es wird bei 36 Druck gegeben. Bei 27 ist geschlossen, bei 32 geöffnet. Die Kanäle 11-16 fahren sukzessive an den Kanälen 21-26 vorbei. In der gezeichneten Position stehen gerade die Kanäle 15, 25 voreinander. Das im Raum 43 befindliche Fett wird über den Hauptkanal 6 sukzessive zu den einzelnen Schmierstellen geführt.

Bei der abgewandelten Bauart nach Fig. 10 ist das Segment 5e am rechten Ende mit einer Ringschulter 81 versehen, durch die zwischen den beiden aufeinander folgenden Segmenten 5e, 5f eine Ringnut 82 entsteht. In sie mündet der bei diesem Beispiel verkürzte Verteilkanal 62. Dadurch kann erzielt werden, dass der Kanal 62 in Wirkungsstellung nicht mit dem zugehörigen Kanal 72 in radialer Richtung zu fluchten braucht.

Vielmehr genügt es, wenn die Ringnut 82 gegenüber dem Zuführungskanal 72 steht ; der Kanal 62 kann in irgendeiner Position in der in Fig. 10 senkrecht zur Zeichenebene verlaufenden, durch die Kanäle 62, 72 gehenden Ebene stehen.

Bei dem weiteren, mit Fig. 7, 8 vergleichbaren Beispiel nach Fig. 11, 12 enthält das Segment 5e an seinem in der Figur rechten Ende zwei einander gegenüberliegende Schlitze 62a, 62b, welche in die Ringnut 82 münden und dieselbe Funktion erfüllen, wie der verkürzte Verteilkanal 62 nach Fig. 10.

Es können auch mehrere Progressiv-Verteiler gemäss den dargestellten Bauarten parallel zueinander geschaltet sein. Die Verteiler können zur Schmierung ganz verschiedener Mechanismen einer Webmaschine oder aber einer anderen Maschine verwendet werden. Der jeweils verwendete Steuerkolben kann ganz verschiedene Länge haben und eine verschiedene Anzahl von Verteilkanälen aufweisen. Als Schmiermittel kann auch ein flüssiges oder dampfförmiges Medium verwendet werden. Die Teilung D kann auch kleiner sein als die Teilung E, wodurch eine andere Reihenfolge in der Gegenüberstellung der Verteilkanäle 11-16 einerseits und der Zuführkanäle 21 bis 26 andererseits entsteht.

## Patentansprüche

1. Verteilelement einer Schmiereinrichtung, insbesondere für eine Webmaschine, mit mindestens einem in einem Gehäuse (1) hin und her verschiebbaren Steuerkolben (5), durch dessen Bewegung auf einer Stirnseite des Steuerkolbens gespeichertes Schmiermittel zu den Schmierstellen gedrückt wird, wobei der Steuerkolben (5) einen mit dem Schmiermittel in Verbindung stehenden, achsparallelen Hauptkanal (6) und mehrere aus diesem im wesentlichen radial abzweigende, axial gegeneinander versetzte Verteilkanäle (11-16 ; 61-66) enthält, und wobei in dem Gehäuse (1) den Verteilkanälen (11-16 ; 61-66) zugeordnete, axial gegeneinander versetzte Zuführkanäle (21-26 ; 71-76) zum Zuführen des Schmiermittels zu den Schmierstellen (18) angeordnet sind, dadurch gekennzeichnet, dass die Verteilkanäle (11-16 ; 61-66) in axialen Abständen (Teilung E) voneinander angeordnet sind, welche von den entsprechenden Abständen (Teilung D) zwischen den ihnen zugeordneten Zuführkanälen (21-26 ; 71-76) derart abweichen, dass bei Bewegung des Steuerkolbens (5) progressiv jeweils nacheinander ein Verteil- und ein zugehöriger Zuführkanal miteinander in Wirkungsverbindung gelangen.

2. Element nach Anspruch 1, dadurch gekennzeichnet, dass der Steuerkolben (5) in einem in das Gehäuse (1) einsetzbaren Zylinder (4) verschiebbar angeordnet ist.

3. Element nach Anspruch 1 oder 2, mit einer Rückstellfeder (33) für den Steuerkolben (5) und einem an einem Ende des Hauptkanals (6) angeordneten Schmiermittel-Vorratsraum (42, 43), dadurch gekennzeichnet, dass am anderen Ende des Hauptkanals (6) ein Sitzventil (29) zur Schmiermittelzuführung angeordnet ist (Fig. 1-3).

4. Element nach Anspruch 1 oder 2, dadurch gekennzeichnet, dass zu beiden Stirnseiten des Steuerkolbens (5) je eine Schmiermittel-Zuführungsleitung (36, 36a) angeschlossen ist, durch welche der Steuerkolben (5) wechselweise hin und her beaufschlagt ist.

5. Element nach Anspruch 4, dadurch gekennzeichnet, dass der Steuerkolben (5) eine axial verschiebbare Ventilstange (55) enthält, an deren Enden zwei Ventilscheiben (56, 57) angebracht sind, welche mit den Stirnseiten des Steuerkolbens (5) wechselweise betätigbare Ventile (27, 32) für das Schmiermittel bilden.

6. Element nach einem der vorangehenden Ansprüche, dadurch gekennzeichnet, dass der Steuerkolben (5) aus einzelnen Abschnitten (5a-5m, 5r-5x) zusammengesetzt ist.

7. Element nach Anspruch 6, gekennzeichnet durch ein die Abschnitte (5a-5m) in Gruppen (P, Q) unterteilendes, zusammen mit ihnen verschiebbares Trennungsstück (60) (Fig. 7, 8).

8. Element nach Anspruch 6, dadurch gekennzeichnet, dass die Abschnitte (5r-5x) verschieden lang sind (Fig. 9).

9. Element nach einem der vorangehenden Ansprüche, dadurch gekennzeichnet, dass mindestens ein Verteilkanal (11-16) in einen Ringraum (82) des Steuerkolbens (Abschnitt 5e) mündet, welcher dem zugehörigen Zuführkanal (72) gegenüber stellbar ist.

10. Element nach den Ansprüche 1 und 2, dadurch gekennzeichnet, dass Zylinder (4) und Steuerkolben (5) als bauliche Einheit ausgebildet sind, die in einer in der Nähe der Schmierstellen (18) befindliche, mit diesen in Verbindung stehende Bohrung (3') der zu schmierenden Maschine untergebracht sind.

## Claims

1. A distributor element for a lubrification apparatus, more specifically for a loom, the element comprising at least one control piston (5) which is reciprocable in a casing (1) and whose movement forces lubricant stored on one side of the piston (5) to the lubrication stations, the piston (5) having a main duct (6) which communicates with the lubricant and which extends parallel to the axis of the control piston (5) and from which a number of axially staggered distribution ducts (11-16 ; 61-66) branch off substantially radially, axially offset feed ducts (21-26 ; 71-76) which are associated with the distribution ducts (11-16 ; 61-66) and which serve to supply the lubricant to the lubrication stations (18) being disposed in the casing (1), characterised in that the distribution ducts (11-16 ; 61-66) are spaced apart from one another at axial intervals (spacing E) so differing from the corresponding intervals (spacing D) between their associated feed ducts (21-26 ; 71-76) that when the control piston (5) moves, a distribution duct and an associated feed duct come into operative engagement with one another progressively and consecutively.

2. An element according to claim 1, characterised in that the control piston (5) is movable in a cylinder (4) introducible into the casing (1).

3. An element according to claim 1 or 2 with a restoring spring (33) for the control piston (5) and with a lubricant supply chamber (42, 43) disposed at one end of the main duct (6), characterised in that a seated valve (29) for lubricant supply is disposed at the other end of the main duct (6) (Figs 1-3).

4. An element according to claim 1 or 2, characterised in that lubricant supply lines (36, 36a) are connected one each to the two end faces of the control piston (5) for alternate actuation thereof in reciprocating fashion.

5. An element according to claim 4, characterised in that the control piston (5) comprises an axially movable valve rod (55) having at its ends two valve discs (56, 57), the same co-operating with the end faces of the control piston (5) to form alternately actuatable valves (27, 32) for the lubricant.

6. An element according to any of the previous claims, characterised in that the control piston (5) is combined from a plurality of parts (5a-5m, 5r-5x).

7. An element according to claim 6, characterised by a separating member (60) which subdivides the parts (5a-5m) into groups (P, Q) and which is movable together therewith (Figs 7, 8).

8. An element according to claim 6, characterised in that the parts (5r-5x) are of different lengths (Fig. 9).

9. An element according to any of the previous claims, characterised in that at least one distribution duct (11-16) extends into an annular chamber (82) of the control piston (part 5e), such chamber being adjustable relatively to the associated feed duct (72).

10. An element according to claims 1 and 2, characterised in that the cylinder (4) and the control piston (5) are a constructional unit disposed in a bore (3) in the machine to be lubricated, the latter bore being disposed near, and communicating with, the lubrication stations (18).

**Revendications**

1. Elément de distribution d'un dispositif de lubrification, en particulier pour un métier à tisser, comprenant au moins un piston de commande (5) se déplaçant alternativement dans un boîtier par le mouvement duquel du lubrifiant accumulé sur une face frontale du piston est poussé vers les endroits de lubrification, le piston de commande (5) comportant alors un canal principal (6) parallèle à l'axe et en communication avec le lubrifiant et plusieurs canaux de répartition (11-16 ; 61-66) décalés axialement les uns par rapport aux autres et bifurquant du canal principal sensiblement radialement, et des canaux d'amenée (21-26 ; 71-76) étant disposés dans le boîtier (1) de manière à être décalés axialement les uns par rapport aux autres et à être associés aux canaux de distribution (11-16 ; 61-66) pour amener le lubrifiant aux emplacements de lubrification (18), caractérisé en ce que les canaux de distribution (11-16 ; 61-66) sont disposés à des distances axiales (séparation E) les uns par rapport aux autres, ces distances s'écartant de telle manière des distances correspondantes (division D) entre les canaux d'amenée (21-26 ; 71-76) qui leur sont associés que lors du mouvement du piston de commande (5), un canal de distribution et un canal d'amenée qui lui appartient viennent progressivement et respectivement l'un après l'autre en liaison mutuelle d'action.

2. Elément selon la revendication 1, caractérisé en ce que le piston de commande (5) est disposé de façon à pouvoir se déplacer dans un cylindre (4) qu'on peut introduire dans le boîtier (1).

3. Elément selon la revendication 1 ou la revendication 2, comprenant un ressort de rappel (33) pour le piston de commande (5) et un réservoir de lubrifiant (42, 43) disposé à une extrémité du canal principal (6), caractérisé en ce qu'on dispose à l'autre extrémité du canal principal (6) une soupape à siège (29) vers l'arrivée du lubrifiant (figures 1-3).

4. Elément selon la revendication 1 ou la revendication 2, caractérisé en ce qu'on raccorde sur les deux côtés frontaux du piston de commande (5) une conduite respective d'arrivée de lubrifiant (36, 36a) au moyen de laquelle le piston de commande (5) est alternativement alimenté en va-et-vient.

5. Elément selon la revendication 4, caractérisé en ce que le piston de commande (5) comprend une tige de soupape (55) déplaçable axialement et sur les extrémités de laquelle sont disposés deux disques de soupape (56, 57) qui constituent avec les côtés frontaux du piston de commande (5) des soupapes (27, 32) à actionnement alternatif pour le lubrifiant.

6. Elément selon l'une des revendications précédentes, caractérisé en ce que le piston de commande (5) est constitué par des sections individuelles (5a-5m, 5r-5x).

7. Elément selon la revendication 6, caractérisé par une pièce de séparation (60) subdivisant les sections (5a-5m) en groupes (P, Q) et déplaçable en compagnie de celles-ci (figures 7, 8).

8. Elément selon la revendication 6, caractérisé en ce que les sections (5r-5x) ont des longueurs différentes (figure 9).

9. Elément selon l'une des revendications précédentes, caractérisé en ce qu'au moins un canal de distribution (11-16) débouche dans un espace annulaire (82) du piston de commande (section 5e), cet espace pouvant être mis en face du canal d'arrivée associé (72).

10. Elément selon les revendications 1 et 2, caractérisé en ce que le cylindre (4) et le piston de commande (5) sont conformés comme une unité structurelle qui est placée dans un alésage (3') de la machine à lubrifier se trouvant au voisinage des emplacements de lubrification (18) et en communication avec ceux-ci.

Fig.2

Fig.1

Fig.3

0 067 920

# Fig.4

# Fig.5

# Fig.6

0 067 920

Fig.7

Fig.8

**Fig.9**

**Fig.12**

**Fig.11**

**Fig.10**

0 067 920